# EUROPEAN PATENT APPLICATION

(11) **EP 1 136 022 A2**
(43) Date of publication of application: **26.09.2001**
(21) Application number: 00309684.9
(22) Date of filing: 02.11.2000
(51) Int. Cl.: A47J 27/04

(54) **An improved electric cooking apparatus**

(30) Priority: 20.03.2000 CN 00203393
(71) Applicant: CHINA PACIFIC TRADE LTD., Tortola (VG)
(72) Inventor: Chan, Wing-Kin Block A-C, 4th. Floor,, San Po Kong, Kowloon, Hong Kong (CN)
(74) Representative: Boden, Keith McMurray

(57) **Abstract**

An electric cooking apparatus including a main housing, a heated compartment and a steaming compartment in which the heated compartment is received within said main housing and is adapted to be heated by heating elements within said main housing, said heated compartment including a base portion, a continuous peripheral wall extending upwardly from the edge of said base portion and an aperture opposite said base portion which aperture is defined by the upper end of said peripheral wall; and at least a first steaming compartment including a first removable member having a liquid retainable base portion and a peripheral wall extending from said base portion wherein a plurality of apertures are formed in the peripheral wall at a level above the base portion to allow steam communication between the heated compartment and the steaming compartment.

## Description

### Field of the Invention

The present invention relates to an electric cooking apparatus and, more particularly, to an electric cooking apparatus which is adapted to cook food separately by steam heating and by direct or indirect conduction heating.

### Background of the Invention

It is generally known that food cooked by steam heating is generally healthier than food cooked by grilling, stir-frying or deep-frying because less oil or fat is involved in the cooking and more nutrients are retained. With the increasing awareness by the population of the benefit of food cooked by steam heating, more and more households begin to use steam heating as a primary method of preparing daily meals.

Electric steam cooking apparatuses for preparing steamed food are well-known. A conventional electric steam cooker usually comprises a steam heating compartment which is positioned directly above a steam generating reservoir. The steam heating or cooking compartment and the reservoir are usually only separated by a perforated member for efficient steaming. The perforated member usually forms the bottom of the steaming compartment. A major disadvantage of such a design is that fat from steamed meat, food juices, greasy sauces and food drippings can easily fall into the reservoir below, thereby causing unpleasant odors which are spread by the steaming process and, at the same time, staining the reservoir.

Different improvements have been suggested to alleviate the above problem, for example, see US Patent No.5,097,753 issued to Naft, No.5,189,947 to Yim, No.5,400,701 to Sham and No.5,893,319 to Bois. However, the aforementioned improvements generally require relatively complicated measures in order to alleviate the aforementioned problem. In the aforesaid improvements, a liquid retaining partition is typically installed between the steam compartment and the reservoir. A defined steam channel which extends from the steam generating reservoir is added to the cooking apparatus to transport steam from the reservoir to the steam compartment as they are no longer mutually communicable because of the extra partition. These extra parts make a somewhat simple apparatus more complicated and more expensive and may, at the same time, reduce the steam heating- efficiency. Hence, it will be highly desirable if the aforementioned problems can be alleviated by simple measures.

In addition to the above, food cooking by steam heating is generally a slow cooking process which does not require frequent attention by the user. Therefore, it would be advantageous if there is provided an electric cooking apparatus which can cook food by steam heating while another type of food which also requires a slow cooking process, for example, rice cooking, can be cooked simultaneously in another cooking compartment within the same apparatus housing.

In fact, the art of cooking by steaming in one cooking compartment while cooking by direct heating is occurring in another cooking compartment is well-known. Electric rice cookers have been used to cook rice while at the same time the steam generated by rice cooking is used to steam cook other types of food. However, a user has to have a very accurate timing of the rice cooking process so that a perforated steaming plate can be placed on top of the almost cooked rice in order to form a temporary steaming chamber between the perforated plate and the lid of the cooker. However, it is a recongized problem that it is difficult to remove the steamed food from the rice cooker because of the heat. Also fatty food juices always spill over to the rice underneath during the steaming process due to overflowing or when the food is being removed from the cooker. Hence, it would be advantageous to provide an electric cooking apparatus which can be used to cook food by steam heating and at the same time cook rice without the aforementioned problems.

Furthermore, a conventional electric cooking apparatus which can be used to cook food by steam heating usually includes a steam heating compartment ("steaming compartment" hereinafter) which is generally circular in shape and is generally not suitable for steaming articles which are elongated, such as fish, chicken or duck. On the other hand, if a circular dish is placed within the steaming compartment, it can be difficult to remove because there may be insufficient space to allow removal of a circular dish if the steaming compartment is also circular and the diameters are similar. Hence, it will also be advantageous to provide a electric cooking apparatus in which such circular dishes can be removed more easily.

It is an aspect of the present invention to provide an electric cooking apparatus which can be used to cook food by steam heating in one cooking compartment and, at the same time, cook food by conduction heating in another compartment with the aforementioned problems alleviated.

It is also an aspect of the present invention to provide an electric rice cooker which can be used to steam cook food while rice is being cooked and with the aforementioned problems alleviated. It is a further aspect of the present invention to at least provide the public with a useful choice.

### Summary of the invention

Accordingly, in a first aspect, the present invention consists of an electric cooking apparatus including a main housing, a heated compartment and a steaming compartment wherein said heated compartment is received within said main housing and is adapted to be heated by heating elements within said main housing, said heated compartment including a base portion, a continuous peripheral wall extending upwardly from the edge of said base portion and an aperture opposite said base portion which aperture is defined by the upper end of said peripheral wall; and at least a first steaming compartment including a first removable member having a liquid retainable base portion and a peripheral wall extending from said base portion wherein a plurality of apertures are formed in the peripheral wall at a level above the base portion to allow steam communication between the heated compartment and the steaming compartment.

Preferably, at least a first steaming compartment or the heated compartment of the electric cooking apparatus is generally elliptical in shape.

Preferably, the electric cooking apparatus further comprises a second removable member attachable to a top of said first removable member and having a base portion formed with a plurality of steam vents and a peripheral wall extending from the edge of said base portion.

Preferably the electric cooking apparatus also includes a spacer adapted to expand the capacity of said first steaming compartment, said spacer having a circumferential flange and a continuous peripheral wall extending from the edge of said flange and being attachable to a top of the peripheral wall of said first steaming compartment.

In another aspect of the present invention, there is provided an electric cooking apparatus including a main housing, a heated compartment and a steaming compartment, wherein said steaming compartment includes at least a first removable member having a liquid retainable base portion and a peripheral wall extending from said base portion wherein a plurality of apertures are formed in the peripheral wall.

In another further aspect of the present invention, there is provided an electric cooking apparatus including a main housing, a heated compartment and a steaming compartment, wherein said steaming compartment includes an elliptical shaped removable member having flanges at both lengthwise ends which are adapted to be suspended from said heated compartment during use.

In yet another aspect of the present invention, a removable member for use with an electric steaming apparatus, comprising a base portion, and a peripheral wall extending upwardly from the edge of said base portion, wherein a plurality of apertures are provided in said peripheral wall.

### Brief Description of the Drawings

Preferred embodiments of the present invention will now be explained, by way of examples, with reference to the accompanying drawings in which :-
Fig. 1 is a perspective view of the electric cooking apparatus according to the present invention;
Fig. 2 is a vertical sectional view of the apparatus of Fig. 1; and
Fig. 3 is vertical cross section of a second embodiment of the present invention.

### Detailed Description of the Preferred Embodiments

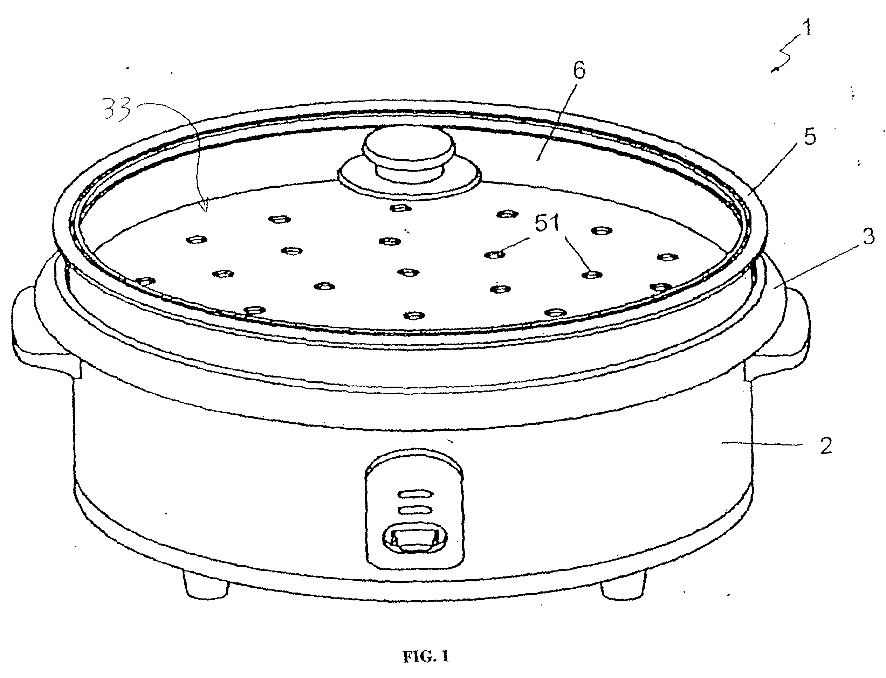

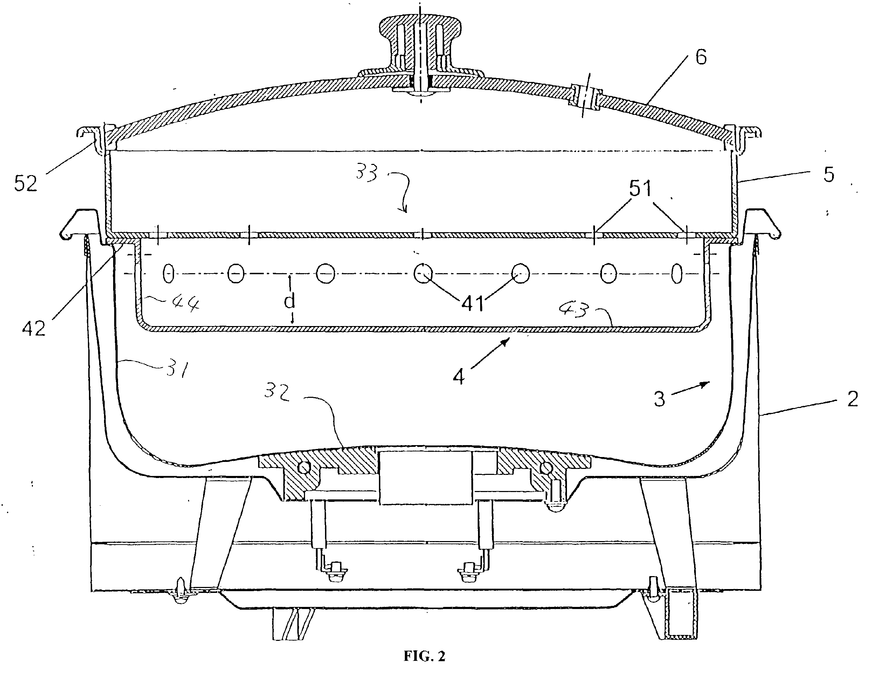

Referring firstly to Figures 1 & 2, there is shown an electric cooking apparatus (1) which includes a main housing (2), a heated compartment (3), a removable steaming member (4) and a top lid (6). The heated compartment is received within the main housing (2) and is adapted to be heated directly or indirectly by heating elements installed within the main housing (2). The heated compartment (3) includes a base portion (32), an upper aperture (33) and a continuous peripheral wall (31) extending upwardly from the edge of the base portion. The upper, and free, end of the peripheral wall defines the upper aperture which is directly opposite the base portion (31).

The removable steaming member (4) is primarily provided to define a steaming chamber between the top lid (6) and the steaming member. The steaming member is adapted to be received within the heated (3) compartment at a level intermediate between the top lid (6) and the base portion (32) of the heated compartment. The steaming member (4) includes a base portion (43), a peripheral wall (44) extending upwardly from the edge of the base portion and a cricumferential flange (42) extending at least partially around the top edge of the peripheral wall so that the steaming member can be supported by the top part of the peripheral wall of the heated compartment when the steaming member is received within the heated compartment. To alleviate the earlier mentioned problems, the base portion (43) of the steaming member is preferably non-perforated. To allow direct steam heating, a plurality of apertures (41) which function as steam vents are formed along the peripheral wall at a level above the base portion. The base portion of the steaming member is perferably made of a conductive material (such as aluminium or tin) so that the underside of the food being cooked can be heated by the heat generated by the base portion as a result of steam heat transfer while other parts of the food can be cooked by direct steam heating.

The steaming member is preferably elliptical so that elongated articles, such as a whole fish, a whole chicken or a whole duck, can be steamed in its entirety when placed inside the steaming compartment which is formed by the steaming member and the top lid. The electric cooking apparatus is preferably provided with a control and/or a timing device to allow a user to control the cooking apparatus, including in particular the heating elements for cooking. Furthermore, when an elliptical or elongated steaming member is used within a circular heated compartment, flanges extending only from two lengthwise ends of the steaming member would be adequate to support the steaming tray. In such a configuration, steam can pass through the space formed between sides of the steaming member and the peripheral wall of the heated compartment to reach the steaming compartment. In addition, the heated compartment can also be made into an elliptical shape to conform with the shape of the steaming member provided sufficient space is left to allow passage of the steam to the steam vents in the wall of the steaming member.

A typical preferred elliptical steaming member has a long axis of about 250mm and a short axis of about 190mm with a depth of about 40mm. Preferably the circumferential flange has a width of about 15mm to support the steaming member while leaving sufficient space for the passage of steam from the heating reservoir into the steaming chamber. Preferably, the steam vents (41) are located at a level which is preferably about 5-10mm above the base portion. As the steaming member resembles a cooking pot, meat juices, sauces, fruit drippings and the like will be retained in the steaming member during steaming and removal of the steaming member from the heated compartment.

With such improvements, the heated compartment can be used to perform a slow cooking process, for example, rice cooking while another type of food is being steamed in the steaming compartment. In this way, the food cooked by the heated compartment underneath will not easily be contaminated by spill-overs from the steaming compartment.

To increase the steaming capacity of the cooking apparatus, a second steaming member (5) of substantially the same design can be placed on top of the first steaming member (4) so that the steaming compartment now comprises a first and a second steaming chambers in which two different types of food can be prepared simultaneously by steam heating while the heated compartment is cooking yet another type of food. Apertures (51) are preferably formed on the base portion of the second steaming member to allow steam communication between the first and the second steaming members.

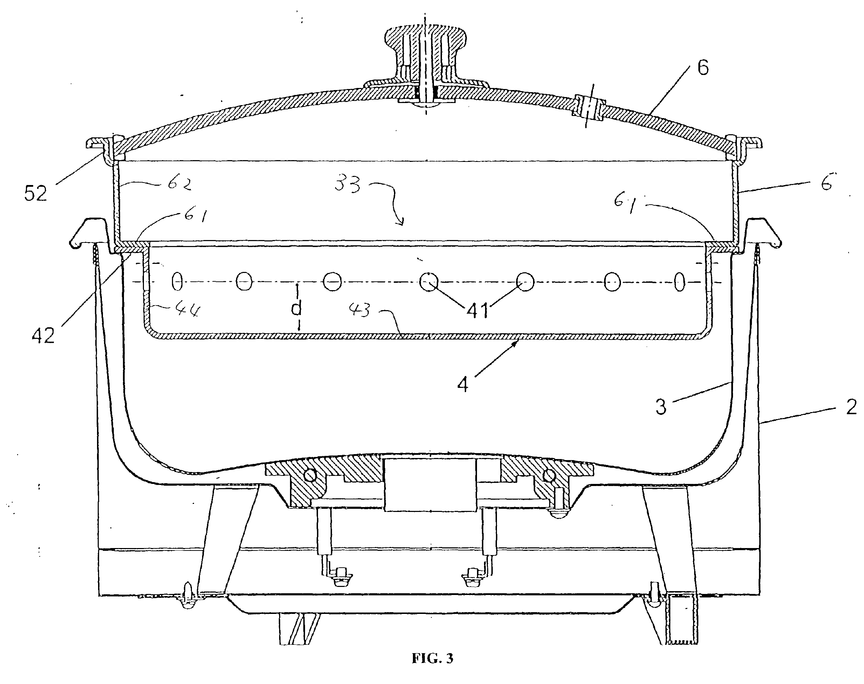

Referring to Fig. 3, a second embodiment of the present invention is shown. In this embodiment, a removable spacer (6) is placed between the top lid and the first steaming member so that the height of the steaming chamber is considerably increased to accommodate bigger piece of food to be steamed. The spacer includes a base portion and a peripheral wall. The base portion comprises a circumferential flange (61) which generally conforms to the shape of the upper edge of the peripheral wall (62) of the heated compartment or the first steaming member and is designed to rest on the upper edge of the first steaming member. The peripheral wall (62) extends upwardly from the edge of the circumferential flange to provide for the additional height to expand the capacity of the steaming compartment.

While the present invention has been explained with reference to the embodiments described above, it would be obvious to the person skilled in the art that other variants to the embodiments can be used without loss of generality and without affecting the scope of the present invention. In particular, it should be noted that the removable second steaming member or the removal spacer can be removed from the above embodiments or used together with another without affecting the usefulness of the present invention.

## Claims

1. An electric cooking apparatus including a main housing, a heated compartment and a steaming compartment wherein:-
• said heated compartment is received within said main housing and is adapted to be heated by heating elements within said main housing, said heated compartment including a base portion, a continuous peripheral wall extending upwardly from the edge of said base portion and an aperture opposite said base portion which aperture is defined by the upper end of said peripheral wall; and
• at least a first steaming compartment including a first removable member having a liquid retainable base portion and a peripheral wall extending from said base portion wherein a plurality of apertures are formed in the peripheral wall at a level above the base portion to allow steam communication between the heated compartment and the steaming compartment.

2. An electric cooking apparatus according to Claim 1, wherein at least a first steaming compartment is generally elliptical in shape.

3. An electric cooking apparatus according to Claim 1 or 2, wherein said heated compartment is generally elliptical in shape.

4. An electric cooking apparatus according to any preceding claim, further comprising a second removable member attachable to a top of said first removable member and having a base portion formed with a plurality of steam vents and a peripheral wall extending from the edge of said base portion.

5. An electric cooking apparatus according to Claim 4, wherein said peripheral wall of said second removable member generally conforms to the shape of the peripheral wall of said heated compartment.

6. An electric cooking apparatus according to any preceding claim, further including a spacer adapted to expand the capacity of said first steaming compartment, said spacer having a circumferential flange and a continuous peripheral wall extending from the edge of said flange and being attachable to a top of the peripheral wall of said first steaming compartment.

7. An electric cooking apparatus including a main housing, a heated compartment and a steaming compartment, wherein said steaming compartment includes at least a first removable member having a liquid retainable base portion and a peripheral wall extending from said base portion wherein a plurality of apertures are formed in the peripheral wall.

8. An electric cooking apparatus including a main housing, a heated compartment and a steaming compartment, wherein said steaming compartment includes an elliptical shaped removable member having flanges at both lengthwise ends which are adapted to be suspended from said heated compartment during use.

9. A removable member for use with an electric steaming apparatus, comprising:-
• a base portion; and
• a peripheral wall extending upwardly from the edge of said base portion, wherein a plurality of apertures are provided in said peripheral wall.
